# EUROPEAN PATENT APPLICATION

(11) **EP 2 983 441 A1**
(43) Date of publication of application: **10.02.2016**
(21) Application number: 14306263.6
(22) Date of filing: 08.08.2014
(51) Int. Cl.: H04W 76/02

(54) **Device-to-device communication**

(71) Applicant: ALCATEL LUCENT, 92100 Boulogne-Billancourt (FR)
(72) Inventor: Puddle, Nicola, Swindon, Wiltshire SN5 7DJ (GB); Lim, Seau Sian, Swindon, Wiltshire SN5 7DJ (GB); Palat, Sudeep, Swindon, Wiltshire SN5 7DJ (GB); Brend, Graham, Swindon, Wiltshire SN5 7DJ (GB); Wong, Shin Horng, Swindon, Wiltshire SN5 7DJ (GB)
(74) Representative: Leppard, Andrew John

(57) **Abstract**

A network node method, a network node, a user equipment method, user equipment and computer program products are disclosed. The network node method of supporting device-to-device communication, comprises: detecting that a user equipment configured to communicate using a first cellular radio access technology supported by the network node is operable to support device-to-device communication with another user equipment using a second cellular radio access technology; and instructing the user equipment to reconfigure to communicate using the second cellular radio access technology even when no cellular coverage is available to the user equipment using the second cellular radio access technology. In this way, when a user equipment wishes to perform device-to-device communication then the network is able to reconfigure the user equipment to communicate using the second radio access technology to enable device-to-device communication with other user equipment regardless of whether the user equipment is within a cellular coverage area for that radio access technology. It will be appreciated that it would normally not be desirable for a network to reconfigure the user equipment when no cellular coverage would be provided as a consequence of that reconfiguration. However, such reconfiguration may be necessary in order to enable the user equipment to perform device-to-device communications.

## Description

### FIELD OF THE INVENTION

The present invention relates to a network node method, a network node, a user equipment method, user equipment and computer program products.

### BACKGROUND

Wireless telecommunications networks are known. In a cellular system, radio coverage is provided to user equipment, for example, mobile telephones, by geographical area. Those geographical areas of radio coverage are known as cells. Abase station is located in each geographical area to provide the required radio coverage and support communication with the user equipment. Abase station may support more than one cell providing coverage in the same geographical area. User equipment in the area served by a base station receives information and data from that base station and transmits information and data to that base station. Information and data transmitted by a base station to user equipment occurs on frequency channels of radio carriers known as downlink carriers. Information and data transmitted by user equipment to a base station occurs on frequency channels of radio carriers known as uplink carriers.

It is known to provide multiple different cellular networks, each supporting a different radio access technology. It will be appreciated that cellular radio access technologies are those technologies employed by cellular base stations providing a cellular telecommunications network such as those specified by the 3rd Generation Partnership Project (3GPP) standards such as, for example, global system for mobile communications (GSM), universal mobile telecommunications system (UMTS) or long term evolution (LTE). Compatible user equipment may be operable to select one of these different radio access technologies in order to communicate with the base station from one of those cellular networks.

Whilst each of these different radio access technologies provides different functionality to the user equipment, the presence of these different cellular networks can lead to unexpected consequences for those user equipment. Accordingly, it is desired to provide an improved technique for controlling user equipment within wireless telecommunications networks.

### SUMMARY

According to a first aspect, there is provided a network node method of supporting device-to-device communication, comprising: detecting that a user equipment configured to communicate using a first cellular radio access technology supported by the network node is operable to support device-to-device communication with another user equipment using a second cellular radio access technology; and instructing the user equipment to reconfigure to communicate using the second cellular radio access technology even when no cellular coverage is available to the user equipment using the second cellular radio access technology.

The first aspect recognizes that one emerging service is that of so-called "device-to-device" proximity services and, in particular, device-to-device discovery and communications for both public safety and non-public safety scenarios. Device-to-device communications enable one user equipment to be able to communicate directly with another user equipment located nearby with little or no network involvement. To support this, two approaches of resource allocation for device-to-device communications are currently possible. In mode 1, a base station or a relay node schedules the exact resources used by user equipment to transmit direct (device-to-device) data and direct control information. In mode 2, a user equipment on its own selects resources from resource pools to transmit direct data and direct control information. Device-to-device communication-capable user equipment should support at least mode 1 when in a (cellular) coverage area and device-to-device communication-capable user equipment should support mode 2 when at the edge of a coverage area and/ or out of a coverage area.

The first aspect also recognizes that device-to-device communication is only supported by some radio access technologies and so it may be necessary for inter-radio access technology mobility in order that device-to-device communication-capable user equipment may participate in device-to-device proximity services. In particular, it may be necessary to support a user equipment which cannot be attached to UMTS (or GSM) in order to participate in LTE device-to-device proximity services. Hence, it may be required to manage inter-radio access technology mobility to support critical device-to-device communication (for public safety reasons) for the following scenarios: when a user equipment is out of coverage of LTE but in coverage of UMTS (both idle and connected mode) or when a user equipment is in coverage of LTE but, due to particular service requests (for example, circuit-switched fallback) should be directed to UMTS. Accordingly, a method is provided. The method may be for a network node in order to support device-to-device communication. The method may comprise detecting, determining or establishing that a user equipment which is configured or operable to communicate using a first cellular radio access technology which is supported by the network node is also operable to support device-to-device communication with another user equipment using a second or another cellular radio access technology. The method may also comprise instructing or requesting that the user equipment reconfigures to communicate using the second cellular radio access technology despite no cellular coverage being available to the user equipment when using the second cellular radio access technology. In this way, when a user equipment wishes to perform device-to-device communication then the network is able to reconfigure the user equipment to communicate using the second radio access technology to enable device-to-device communication with other user equipment regardless of whether the user equipment is within a cellular coverage area for that radio access technology. It will be appreciated that it would normally not be desirable for a network to reconfigure the user equipment when no cellular coverage would be provided as a consequence of that reconfiguration. However, such reconfiguration may be necessary in order to enable the user equipment to perform device-to-device communications.

In one embodiment, the instructing comprises transmitting a handover message to the user equipment to handover to a base station supporting communication using the second cellular radio access technology. Accordingly, the user equipment may be instructed to handover to a base station when one exists which supports communication using the second cellular radio access technology.

In one embodiment, the instructing comprises instructing the user equipment to release communication using the first cellular radio access technology and redirecting the user equipment to communicate using the second cellular radio access technology. Accordingly, the user equipment may be instructed to release communications using the first cellular radio access technology and maybe redirected to communicate using the second cellular radio access technology.

In one embodiment, wherein the redirecting comprises transmitting an instruction instructing the user equipment to reconfigure communication characteristics to support communication using the second cellular radio access technology. Accordingly, an instruction may be transmitted to instruct the user equipment to reconfigure its communications interface to support communication using the second radio access technology.

In one embodiment, the instruction comprises an indication of the communication characteristics to support communication using the second cellular radio access technology. Accordingly, the instruction may also include details of those communication characteristics which enable the user equipment to support or perform communication using the second radio access technology.

In one embodiment, the instruction comprises an indication of at least one frequency to support communication using the second cellular radio access technology. Accordingly, a frequency or a frequency band or carrier used to support communication using the second cellular radio access technology may be indicated in the instruction.

In one embodiment, the method comprises receiving an indication that the user equipment is designated as operable to support device-to-device communication with another user equipment using the second cellular radio access technology. Accordingly, the network node may receive an indication that the user equipment is one which is able to support, or is interested in supporting, device-to-device communication with other user equipment using the second cellular radio access technology.

In one embodiment, the indication comprises an indication of configuration characteristics to support device-to-device communication with the another user equipment using the second cellular radio access technology. Accordingly, the indication received from the user equipment may also identify the configuration characteristics required to enable device-to-device communication with other user equipment using the second cellular radio access technology.

In one embodiment, the indication may include an indication of one or more frequencies used for communication using the second cellular radio access technology.

In one embodiment, the detecting comprises receiving an indication from the user equipment that it requires to support device-to-device communication with another user equipment using the second cellular radio access technology. Accordingly, it may be detected that the user equipment is operable to support device-to-device communication when an indication is received from the user equipment that it supports such communication.

In one embodiment, the indication comprises a radio resource control signalling connection release indication message having a cause value indicating that the user equipment requires to support device-to-device communication with another user equipment using the second cellular radio access technology. Accordingly, it may be detected that the user equipment requires to support device-to-device communication when a radio resource control signalling connection release indication message is received which has a particular cause value which indicates that the user equipment wishes to support device-to-device communication.

In one embodiment, the first cellular radio access technology comprises universal mobile telecommunications system and the second cellular radio access technology comprises long term evolution.

According to a second aspect, there is provided a network node operable to support device-to-device communication, comprising: detection logic operable to detect that a user equipment configured to communicate using a first cellular radio access technology supported by the network node supports device-to-device communication with another user equipment using a second cellular radio access technology; and instructing logic operable to instruct the user equipment to reconfigure to communicate using the second cellular radio access technology even when no cellular coverage is available to the user equipment using the second cellular radio access technology.

In one embodiment, the instructing logic is operable to transmit a handover message to the user equipment to handover to a base station supporting communication using the second cellular radio access technology.

In one embodiment, the instructing logic is operable to instruct the user equipment to release communication using the first cellular radio access technology and to redirect the user equipment to communicate using the second cellular radio access technology.

In one embodiment, the instructing logic is operable to transmit an instruction instructing the user equipment to reconfigure communication characteristics to support communication using the second cellular radio access technology.

In one embodiment, the instruction comprises an indication of the communication characteristics to support communication using the second cellular radio access technology.

In one embodiment, the instruction comprises an indication of at least one frequency to support communication using the second cellular radio access technology.

In one embodiment, the network node comprises reception logic operable to receive an indication that the user equipment is designated as operable to support device-to-device communication with another user equipment using the second cellular radio access technology.

In one embodiment, the indication comprises an indication of configuration characteristics to support device-to-device communication with the another user equipment using the second cellular radio access technology.

In one embodiment, the indication comprises an indication of at least one frequency for communicating using the second cellular radio access technology.

In one embodiment, the detecting logic is operable to receive an indication from the user equipment that it requires to support device-to-device communication with another user equipment using the second cellular radio access technology.

In one embodiment, the indication comprises a radio resource control signalling connection release indication message having a cause value indicating that the user equipment requires to support device-to-device communication with another user equipment using the second cellular radio access technology.

In one embodiment, the first cellular radio access technology comprises universal mobile telecommunications system and the second cellular radio access technology comprises long term evolution.

According to a third aspect, there is provided a user equipment method of supporting device-to-device communication, the user equipment being configured to communicate using a first cellular radio access technology supported by a network node and operable to support device-to-device communication with another user equipment using a second cellular radio access technology, comprising: receiving an instruction to reconfigure to communicate using the second cellular radio access technology even when no cellular coverage is available to the user equipment using the second cellular radio access technology.

In one embodiment, the instruction comprises a handover message instructing the user equipment to handover to a base station supporting communication using the second cellular radio access technology.

In one embodiment, the instruction instructs the user equipment to release communication using the first cellular radio access technology and redirects the user equipment to communicate using the second cellular radio access technology.

In one embodiment, the instruction instructs the user equipment to reconfigure communication characteristics to support communication using the second cellular radio access technology.

In one embodiment, the instruction comprises an indication of the communication characteristics to support communication using the second cellular radio access technology.

In one embodiment, the instruction comprises an indication of at least one frequency to support communication using the second cellular radio access technology.

In one embodiment, the method comprises transmitting an indication that the user equipment is designated as operable to support device-to-device communication with another user equipment using the second cellular radio access technology.

In one embodiment, the indication comprises an indication of configuration characteristics to support device-to-device communication with the another user equipment using the second cellular radio access technology.

In one embodiment, the indication comprises an indication of at least one frequency for communicating using the second cellular radio access technology.

In one embodiment, the indication comprises a radio resource control signalling connection release indication message having a cause value indicating that the user equipment requires to support device-to-device communication with another user equipment using the second cellular radio access technology.

In one embodiment, the first cellular radio access technology comprises universal mobile telecommunications system and the second cellular radio access technology comprises long term evolution.

According to a fourth aspect, there is provided user equipment configurable to communicate using a first cellular radio access technology supported by a network node and operable to support device-to-device communication with another user equipment using a second cellular radio access technology, comprising: reception logic operable to receive an instruction to reconfigure to communicate using the second cellular radio access technology even when no cellular coverage is available to the user equipment using the second cellular radio access technology.

In one embodiment, the instruction comprises a handover message instructing the user equipment to handover to a base station supporting communication using the second cellular radio access technology.

In one embodiment, the instruction instructs the user equipment to release communication using the first cellular radio access technology and redirects the user equipment to communicate using the second cellular radio access technology.

In one embodiment, the instruction instructs the user equipment to reconfigure communication characteristics to support communication using the second cellular radio access technology.

In one embodiment, the instruction comprises an indication of the communication characteristics to support communication using the second cellular radio access technology.

In one embodiment, the instruction comprises an indication of at least one frequency to support communication using the second cellular radio access technology.

In one embodiment, the user equipment comprises transmission logic operable to transmit an indication that the user equipment is designated as operable to support device-to-device communication with another user equipment using the second cellular radio access technology.

In one embodiment, the indication comprises an indication of configuration characteristics to support device-to-device communication with the another user equipment using the second cellular radio access technology.

In one embodiment, the indication comprises an indication of at least one frequency for communicating using the second cellular radio access technology.

In one embodiment, the indication comprises a radio resource control signalling connection release indication message having a cause value indicating that the user equipment requires to support device-to-device communication with another user equipment using the second cellular radio access technology.

In one embodiment, the first cellular radio access technology comprises universal mobile telecommunications system and the second cellular radio access technology comprises long term evolution.

According to a fifth aspect, there is provided a computer program product operable, when executed on a computer, to perform the method of the first or the third aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

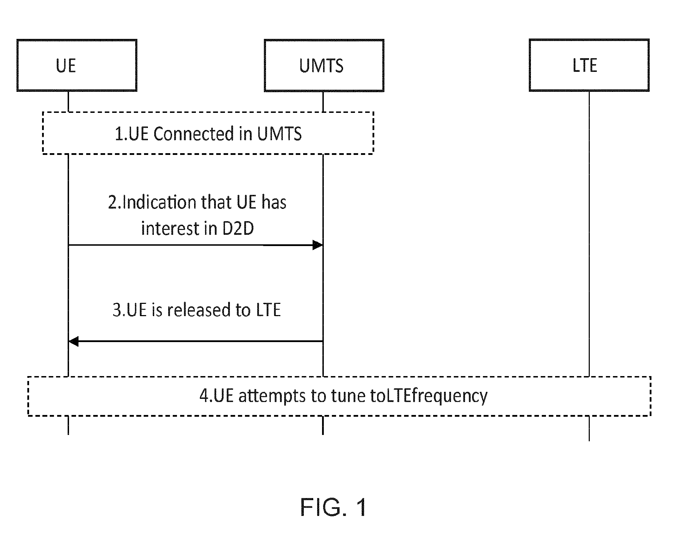

Figure 1 illustrates the messaging between the user equipment and different cellular networks to facilitate inter radio access network mobility between those networks to support the user equipment performing device-to-device communications.

### DESCRIPTION OF THE EMBODIMENTS

Before discussing embodiments in any more detail, first an overview will be provided. Embodiments provide a mechanism to manage inter radio access technology mobility between networks for user equipment capable of performing device-to-device communication. When user equipment desires to perform device-to-device communication, the user equipment is reconfigured to operate using the radio access technology which supports device-to-device communication, even if no cellular coverage is provided to the user equipment using that radio access technology. Although the following embodiments are described with reference to UMTS and LTE networks, it will be appreciated that these techniques would be equally applicable to other cellular networks where user equipment roam between cells provided by a network operator. Embodiments provide techniques for the initial investigation and release of the user equipment to perform device-to-device communication. In particular, techniques are provided to instigate a procedure to re-tune user equipment from UMTS (which does not envisage device-to-device communications occurring) to LTE (which does envisage device-to-device communications occurring) to allow the user equipment to initiate or respond to such device-to-device communication.

### Device-to-device Indication

Whenever a base station decides to hand over a user equipment to UMTS, logic is provided on the base station so that the handover message to the radio network controller from the base station includes an indication that this user equipment should be prioritised to move or return to LTE whenever the user equipment needs to initiate a device-to-device session. Additionally, the base station can also include an indication of the LTE frequencies that such device-to-device communication occurs. This indication could be based on information from the user equipment indicating which frequencies device-to-device communication is performed on.

### Return of User Equipment

Logic is added to the UMTS radio network controller to determine how to handle a user equipment that has been identified as requiring to prioritise device-to-device communications. The radio network controller will determine how best to move or return the user equipment to LTE for a device-to-device session based on the current state of that user equipment. For example, in the case of connected mode, the user equipment may simply be handed back to LTE. Alternatively, depending on the state of the user equipment, the user equipment's UMTS connection could be released and the user equipment then returned or moved to LTE via a redirection, or the user equipment is simply sent out of coverage of LTE. Such sending of the user equipment out of coverage tunes the user equipment's receiver or radio frequency communication interface to LTE rather than to UMTS.

Alternatively or additionally, if a user equipment in a connected mode in UMTS is capable and authorized for device-to-device communication, the user equipment may send an indication to the network that it has an interest in performing device-to-device communication. When the radio network controller receives such an interest in device-to-device communication, logic on the radio network controller subsequently performs a handover of the user equipment to LTE or triggers its release (possibly with redirection) to LTE. Such an interest may be provided using existing messaging by introducing a new cause value for the user equipment to use in radio resource control (RRC) signalling connection release indication messages.

### User Equipment-Requested Return

With this technique, a number of different approaches are possible. For example, if the user equipment requests the release and the RRC signalling connection release indication message is used for this purpose, then the redirection to LTE can be performed using the subsequent RRC signalling connection release message, and so introduces support for a new indication for release to LTE.

### Network-Instigated Return

If the network instigates the release of the user equipment, then the RRC release message may be used. In this message, if a user equipment is directed to LTE, then the frequency to be used is already a mandatory present information element in the message. However, the user equipment may be out of coverage of this frequency, but the radio network controller would include the frequency in the message as it is expected that this frequency is the one that the user equipment has an interest in using for device-to-device communications.

### Example Operation

Figure 1 illustrates the messaging between the user equipment and different cellular networks to facilitate inter radio access network mobility between those networks to support the user equipment performing device-to-device communications.

At step 1, the user equipment is connected to the UMTS network. The user equipment may have connected to the UMTS network from idle or may have been handed over to the UMTS network due to lack of coverage from the LTE network.

At step 2, the user equipment determines that it wishes to use or move to LTE in order to perform device-to-device communication. Accordingly, the user equipment transmits an indication to the UMTS network to indicate that it wishes to return to the LTE network. The indication may also include the LTE frequency on which device-to-device communication is to be performed. Alternatively, or additionally, the frequency may be indicated when the user equipment is handed over from the LTE network.

At step 3, the UMTS network releases the user equipment and directs the user equipment to LTE. Again, this release may include the LTE frequency on which device-to-device communication is to be performed. This release and redirection of the user equipment may occur even though there is no base station in the LTE network to prepare for handover since the user equipment may be out of coverage.

At step 4, irrespective of whether the user equipment is in or out of coverage, the user equipment then re-tunes to the LTE frequency in order to configure the user equipment for device-to-device communication.

Hence, it can be seen that embodiments provide for inter radio access technology mobility for device-to-device communication scenarios. A user equipment connected to a UMTS network, who wishes to establish device-to-device communications, which is not possible to perform and remain compliant with existing UMTS standards, would need to drop the UMTS connection and would use RRC signalling connection release indication messages to do so. This message has two cause values in existing standards "UE requested PS data session end" (which is used for fast dormancy) and "any other cause". Normally, when this message is received and acted upon by the radio network controller, there would also be key performance indicators pegged and associated with the cause value. In the case of "any other cause", this would likely be used to indicate dropped calls (i.e., calls released because of failures/ errors). Pegging of key performance indicators in this scenario would therefore not be useful to the network operator since the user equipment would have released the connection for device-to-device communication purposes and this is, as such, not a failure scenario. Also, for public safety user equipment when in idle mode, it could be expected that a user equipment would stay in LTE and therefore likely override any cell reselection priorities (similar to MBMS). Accordingly, embodiments provide a technique which enables inter radio access technology mobility without these associated difficulties.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network node method of supporting device-to-device communication, comprising:
detecting that a user equipment configured to communicate using a first cellular radio access technology supported by said network node is operable to support device-to-device communication with another user equipment using a second cellular radio access technology; and
instructing said user equipment to reconfigure to communicate using said second cellular radio access technology even when no cellular coverage is available to said user equipment using said second cellular radio access technology.

2. The method of claim 1, wherein said instructing comprises transmitting a handover message to said user equipment to handover to a base station supporting communication using said second cellular radio access technology.

3. The method of claim 1 or 2, wherein said instructing comprises instructing said user equipment to release communication using said first cellular radio access technology and redirecting said user equipment to communicate using said second cellular radio access technology.

4. The method of claim 3, wherein said redirecting comprises transmitting an instruction instructing said user equipment to reconfigure communication characteristics to support communication using said second cellular radio access technology.

5. The method of claim 4, wherein said instruction comprises an indication of said communication characteristics to support communication using said second cellular radio access technology.

6. The method of claim 4 or 5, wherein said instruction comprises an indication of at least one frequency to support communication using said second cellular radio access technology.

7. The method of any preceding claim, comprising receiving an indication that said user equipment is designated as operable to support device-to-device communication with another user equipment using said second cellular radio access technology.

8. The method of claim 7, wherein said indication comprises an indication of configuration characteristics to support device-to-device communication with said another user equipment using said second cellular radio access technology.

9. The method of claim 7 or 8, wherein said indication comprises an indication of at least one frequency for communicating using said second cellular radio access technology.

10. The method of any preceding claim, wherein said detecting comprises receiving an indication from said user equipment that it requires to support device-to-device communication with another user equipment using said second cellular radio access technology.

11. The method of claim 10, wherein said indication comprises a radio resource control signalling connection release indication message having a cause value indicating that said user equipment requires to support device-to-device communication with another user equipment using said second cellular radio access technology.

12. A network node operable to support device-to-device communication, comprising:
detection logic operable to detect that a user equipment configured to communicate using a first cellular radio access technology supported by said network node supports device-to-device communication with another user equipment using a second cellular radio access technology; and
instructing logic operable to instruct said user equipment to reconfigure to communicate using said second cellular radio access technology even when no cellular coverage is available to said user equipment using said second cellular radio access technology.

13. A user equipment method of supporting device-to-device communication, said user equipment being configured to communicate using a first cellular radio access technology supported by a network node and operable to support device-to-device communication with another user equipment using a second cellular radio access technology, comprising:
receiving an instruction to reconfigure to communicate using said second cellular radio access technology even when no cellular coverage is available to said user equipment using said second cellular radio access technology.

14. User equipment configurable to communicate using a first cellular radio access technology supported by a network node and operable to support device-to-device communication with another user equipment using a second cellular radio access technology, comprising:
reception logic operable to receive an instruction to reconfigure to communicate using said second cellular radio access technology even when no cellular coverage is available to said user equipment using said second cellular radio access technology.

15. A computer program product operable, when executed on a computer, to perform the method steps of any one of claims 1 to 11 and 13.
